Europäisches Patentamt

European Patent Office

Office européen des brevets

(11) Veröffentlichungsnummer: **0 194 491**
A2

## (12) EUROPÄISCHE PATENTANMELDUNG

(21) Anmeldenummer: **86102324.0**

(22) Anmeldetag: **22.02.86**

(51) Int. Cl.⁴: **H04Q 11/04** , H04M 11/06

(30) Priorität: **25.02.85 US 705462**

(43) Veröffentlichungstag der Anmeldung:
**17.09.86 Patentblatt 86/38**

(84) Benannte Vertragsstaaten:
**CH DE FR GB IT LI NL SE**

(71) Anmelder: **International Standard Electric Corporation**
**320 Park Avenue**
**New York New York 10022(US)**

(72) Erfinder: **Yanosy, John Anthony, Jr.**
**60 Russell Road**
**Stratford, CT 06497(US)**
Erfinder: **Vij, Jitender Kumar**
**353 Putting Green Road**
**Trumbull, CT 06611(US)**
Erfinder: **Das, Santanu**
**31 Winfield Drive**
**Shelton, CT 06484(US)**

(74) Vertreter: **Villinger, Bernhard, Dipl.-Ing. et al**
**Standard Elektrik Lorenz AG Patent- und**
**Lizenzwesen Postfach 300 929 Kurze Strasse 8**
**D-7000 Stuttgart 30(DE)**

(54) **Fernmeldevermittlungsanlage für Sprache und Daten.**

(57) Durch die Erfindung wird eine bestehende Fernmeldever-mittlungsanlage (10) mit einer Durchschaltevermittlung (20) so ausgestattet, daß Daten digital, insbesondere als Datenpakete, übertragen werden können. Hierzu werden Teilnehmer mit Datenendgeräten (28) über teilnehmerseitige An-schlußeinheiten (14) an die bestehenden Teilnehmerleitungen (18) angeschlossen. Über diese Teilnehmerleitungen (18) lau-fen Sprach-und Datendienste im Zeitmultiplex in pulscodemo-dulierter Form. Die Teilnehmerleitungen (18) dieser Teilneh-mer werden durch eine Zusatzeinrichtung für Datendienste - (12) geschleift. Dort erfolgt wieder die Trennung von Sprach- und Datendienst und die Wiederanpassung des Sprachdien-stes an die bestehende Durchschaltevermittlung (20). Der Datendienst wird zu einem digitalen Koppelnetz (30) geführt.

FIG. 1

Femmeldevermittlungsanlage für Sprache und Daten

Die Erfindung betrifft eine Fernmeldevermittlungsanlage nach dem Oberbegriff des Hauptanspruchs.

Datenverarbeitende Geräte sind heute schon selbst in das kleinste Büro eingekehrt. Die Grenzen eines wirkungsvollen Einsatzes dieser Geräte sind jedoch noch längst nicht erreicht. Ein Grund hierfür liegt darin, daß die Geräte untereinander oft nicht oder unzureichend verbunden sind und sich damit gegenseitig nicht optimal unterstützen können. Beispielsweise muß das Rechnungswesen einer Firma ständig über Lagerbestand und Verkaufszahlen informiert sein; das Management braucht Daten über Produktivität, Lagerbestand und andere die Herstellung beteffenden Informationen.

Nicht nur innerhalb einer Firma, sondern im gesamten Bereich eines öffentlichen Netzes ist zu erwarten, daß Sprache und Daten zwischen beliebigen Teilnehmern austauschbar sein werden. Ein wichtiger Grund für eine Integration von Sprach-und Datendiensten ist wohl der, daß während einer Sprachverbindung verhältnismäßig wenig Information im Vergleich zu einer gleichlangen Datenverbindung ausgetauscht werden kann. Außerdem fallen Daten oft in Datenblöcken an, die in kurzer Zeit als Datenpaket mit hoher Übertragungsgeschwindigkeit übertragen werden sollen.

Das wohl größte Hindernis auf dem Weg zu einem voll integrierten Netz für Sprache und Daten ist die Tatsache, daß die meisten Femmeldeverbindungen von Durchschaltevermittlungen hergestellt werden. Als Durschaltevermittlung wird hier jede analoge und jede nicht paketvermittlungsfähige digitale Vermittlung bezeichnet. Das wesentliche Merkmal einer Durchschaltevermittlung, das sich bei der Verwendung für Datendienste als Nachteil erweist, besteht darin, daß eine Durchschaltevermittlung eine Verbindung durch ein Koppelnetz herstellt bevor irgendein Nachrichtenaustausch, z.B. ein Gespräch, erfolgen kann und daß diese Verbindung bestehen bleibt, bis sämtliche Nachrichten ausgetauscht sind. Alle an dieser Verbindung beteiligten Teile können während der gesamten Zeit nicht für andere Verbindungen verwendet werden. Es ist aber allgemein bekannt, daß bereits bei einem gewöhnlichen Telefongespräch immer wieder Pausen entstehen, während derer keine Information übertragen wird, während derer aber auch nicht durch andere Teilnehmer Information übertragen werden kann. Bei Datenübertragung ist dies erst recht der Fall. Hier ist es wünschenswert, durchgeschaltete Verbindungen durch solche für jedes einzelne Datenpaket aufgebaute Verbindungen zu ersetzen. Eine Durschaltevermittlung müßte hierzu durch eine paketvermittlungsfähige digitale Vermittlung ersetzt werden.

Allerdings ist der größte Teil aller Vermittlungen, in denen auch Daten vermittelt werden sollten, darunter auch die Vermittlungen von Nebenstellenanlagen, als Durchschaltevermittlung aufgebaut. Es ist aber auch erkennbar, daß zwar bald an sehr vielen Vermittlungen Teilnehmer mit Datenendgeräten angeschlossen sein werden, daß aber nur ein kleiner Teil aller Teilnehmer betroffen sein wird. Derzeit werden solche Verbindungen mit Hilfe sogenannter Modems hergestellt. Verbindungsaufbau und Datenübertragung lassen dabei keinen Unterschied zu Sprachdiensten erkennen. Dies wird aber umso umständlicher und teurer, je mehr Teilnehmer mit Datenendgeräten angeschlossen werden. Außerdem sind solche Verbindungen auf Durchschaltevermittlungen angewiesen, wodurch sich zwangsläufig durch die vielen Pausen eine unnötige Belastung ergibt.

Eine Alternative zur Verwendung von Modems besteht im Aufbau eines separaten Netzes, das üblicherweise als local area network oder als LAN bezeichnet wird. Dieses separate Netz erfordert sowohl eine separate digitale Vermittlung als auch eine völlig neue Verkabelung. Damit stehen drei Möglichkeiten zur Wahl, wenn Datendienste Einsatz finden sollen, nämlich erstens die Verwendung von Modems, zweitens die Verwendung eines LAN's und drittens der Ersatz der Durchschaltevermittlung durch eine für Sprache und Daten geeignete digitale Vermittlung. In jedem Fall sind große Investitionen erforderlich und häufig muß eine noch verhältnismäßig neue Durchschaltevermittlung aufgegeben werden.

Der Erfindung liegt deshalb die Aufgabe zugrunde, eine Femmeldevermittlungsanlage der genannten Art so auszugestalten, daß sie auch für Datendienste geeignet ist.

Diese Aufgabe wird gelöst durch eine Femmeldevermittlungsanlage nach der Lehre des Hauptanspruchs. Vorteilhaft ausgestaltete Bestandteile dieser Femmeldevermittlungsanlage sowie deren weitere Ausgestaltung sind den Neben-und Unteransprüchen zu entnehmen.

Durch die Erfindung wird eine bestehende Femmeldevermittlungsanlage mit einer Durchschaltevermittlung so ausgestaltet, daß Daten digital, insbesondere als Datenpakete, übertragen werden können. Hierzu werden Teilnehmer mit Datenendgeräten über teilnehmerseitige Anschlußeinheiten an die bestehenden Teilnehmerleitungen angeschlossen. Über diese Teilnehmerleitungen laufen Sprach-und Datendienste im Zeitmultiplex in pulscodemodulierter Form. Die Teilnehmerleitungen dieser Teilnehmer werden durch eine Zusatzvermittlung für Datendienste geschleift. Dort erfolgt wieder die Trennung von Sprach-und Datendienst und die Wiederanpassung des Sprachdienstes. an die bestehende Durchschaltevermittlung. Der Datendienst wird zu einem digitalen Koppelnetz geführt.

Im folgenden wird die Erfindung anhand eines Ausführungsbeispiels unter Zuhilfenahme der beiliegenden Zeichnung weiter erläutert.

Figur 1 zeigt ein Blockschaltbild eines Systems, das die Grundzüge der Erfindung trägt;

Figur 2 zeigt ein Blockschaltbild einer Zusatzeinrichtung für Datendienste, wie sie im System nach Figur 1 enthalten ist;

Figur 3 zeigt ein Blockschaltbild einer Schnittstellenbaugruppe für Sprach-und Datendienste zur Verwendung in der Zusatzeinrichtung nach Figur 2;

Figur 4 zeigt ein Blockschaltbild einer Schnittstellenbaugruppe zur Durchschaltevermittlung zur Verwendung in der Zusatzeinrichtung nach Figur 2, und

Figur 5 zeigt ein Blockschaltbild einer teilnehmerseitigen Anschlußeinheit für das erfindungsgemäße System nach Figur 1.

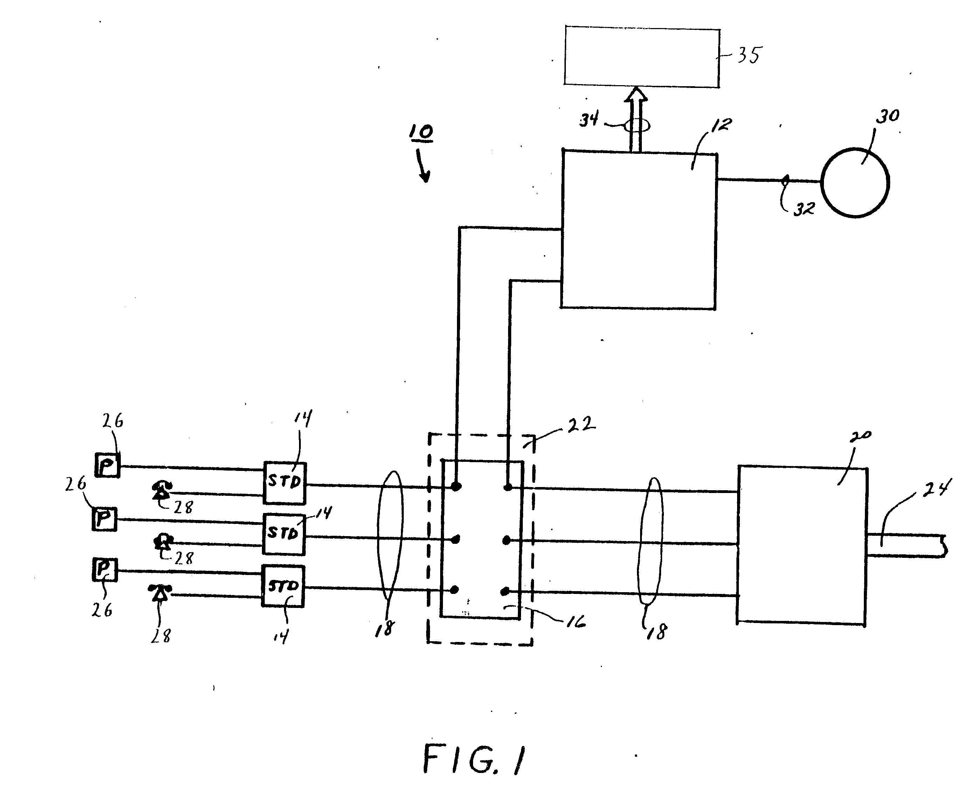

Figur 1 zeigt ein System 10, das die Grundzüge der Erfindung trägt. Damit wird eine Durchschaltevermittlung 20 so ergänzt, daß auch Datendienste möglich sind. Hierzu ist eine Zusatzeinrichtung für Datendienste 12 vorgesehen, die in Serie mit vorhandenen Teilnehmerleitungen 18 der Durchschaltevermittlung 20 geschaltet ist. Der Anschluß der Zusatzeinrichtung 12 an die Teilnehmerleitungen 18 erfolgt in einer Einrichtung 16, die in einem Hauptverteiler 22 enthalten ist. Im bevorzugten Ausführungsbeispiel ist die Durchschaltevermittlung 20 eine automatische Nebenstellenanlage, an die die Teilnehmerleitungen 18 über den Hauptverteiler 22 angeschlossen sind und die über eine Verbindungsleitung 24 beispielsweise an eine ( in der Zeichnung nicht dargestellte) Ortsvermittlungsstelle angeschlossen ist.

Diejenigen der Teilnehmerleitungen 18, an denen Teilnehmer mit Datenendgeräten angeschlossen sind, sind beim Teilnehmer mit einer teilnehmerseitigen Anschlußeinheit 14 abgeschlossen. An die Anschlußeinheit 14 können Datenendgeräte 26 und Sprachendgeräte 28 angeschlossen sein. Die Teilnehmerleitungen 18 sind im Beispiel der Nebenstellenanlage die im Gebäude bereits verlegten Telefonleitungen. Die Zusatzeinrichtung für Datendienste 12 ist außerdem mit einem digitalen Koppelnetz 30 über eine Verbindungsleitung 32 verbunden. Das digitale Koppelnetz 30 kann beispielsweise in einer digitalen Vermittlungsstelle des Systems 12 der ITT enthalten sein. Das digitale Koppelnetz 30 bildet zusammen mit der Zusatzeinrichtung 12 und weiteren ähnlichen oder gleichartigen Zusatzeinrichtungen ein Datennetz, das auch integraler Bestandteil eines diensteintegrierten Datennetzes sein kann. Wie unten noch weiter erklärt werden wird, kann die Zusatzeinrichtung 12 über eine weitere Verbindungsleitung 34 mit einer Einrichtung 35 verbunden sein, durch die den Teilnehmern der Nebenstellenanlage zusätzliche Dienste zugänglich gemacht werden. Solche Dienste können beispielsweise der elektronische Briefdienst, eine Datenverwaltung, andere Endgeräte oder der Anschluß an einen Rechner sein.

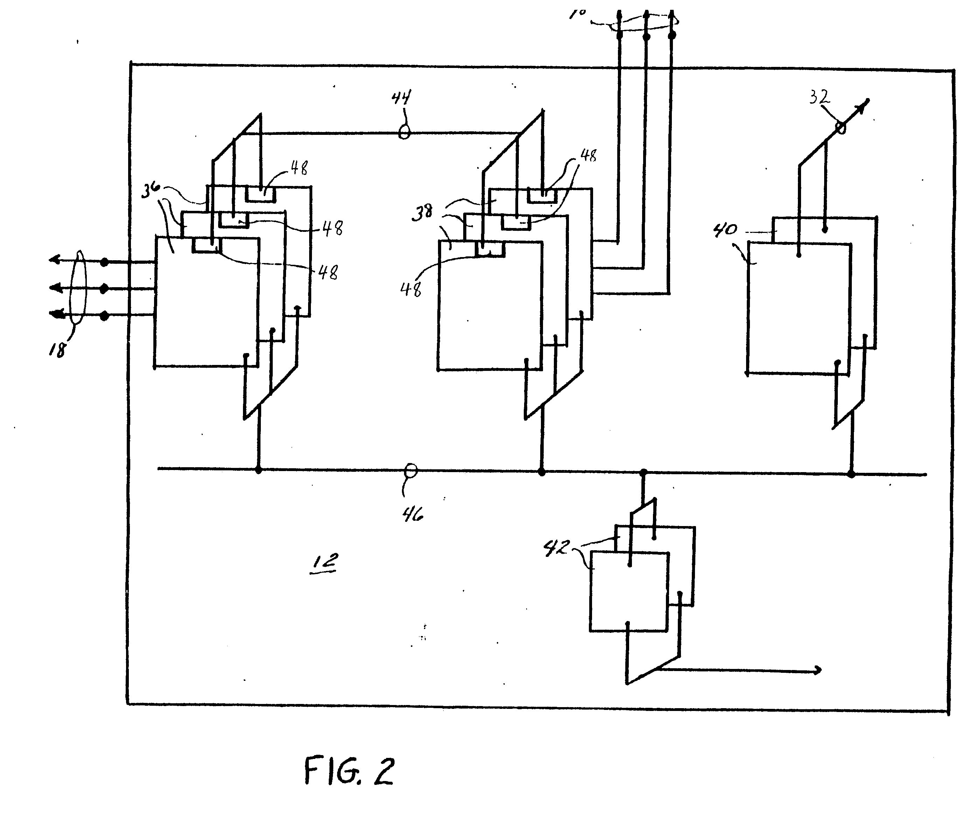

Figur 2 zeigt das Blockschaltbild des bevorzugten Ausführungsbeispiels einer Zusatzeinrichtung für Datendienste 12. Die Zusatzeinrichtung 12 enthält eine Mehrzahl von Schnittstellenbaugruppen für Sprach-und Datendienste 36, eine Mehrzahl von Schnittstellenbaugruppen für Durchschalteverbindungen 38, wenigstens eine Schnittstellenbaugruppe für Datendienste 40 und vorzugsweise wenigstens eine Schnittstellenbaugruppe für zusätzliche Dienste 42.

Jede Schnittstellenbaugruppe ist, wie in der Zeichnung skizziert, auf einer getrennten Leiterplatte aufgebaut. Dadurch ist eine Modularität in Funktion und Größe gegeben. Die Schnittstellenbaugruppen für Sprach-und Datendienste 36 und die Schnittstellenbaugruppen für Durchschalteverbindungen 38 sind durch einen PCM-Bus 44 und durch einen Bus 46 miteinander verbunden. Auch die Schnittstellenbaugruppen für Datendienste 40 und für zusätzliche Dienste 42 sind mit dem Bus 46 verbunden. Jede Schnittstellenbaugruppe für Sprach-und Datendienste 36 und jede Schnittstellenbaugruppe für Durchschalteverbindungen 38 enthält, wie unten noch ausführlicher beschrieben werden wird, einen Schnittstellenbaustein 48, der den Zugang zum PCM-Bus 44 darstellt. Letztlich ist dieser Schnittstellenbaustein 48 für die Bearbeitung der Sprachdienste zuständig. Der Bus 46, an den alle Schnittstellenbaugruppen 36, 38, 40 und 42 angeschlossen sind, sorgt für den internen Datenaustausch in der Zusatzeinrichtung 12. Die Schnittstellenbaugruppen für Datendienste 40 verbinden die Zusatzeinrichtung 12 mit dem Datennetz, im Beispiel also mit dem digitalen Koppelnetz 30. Die Schnittstellenbaugruppen für zusätzliche Dienste 42 sorgen für die Verbindung mit den Einrichtungen 35 für zusätzliche Dienste. Der Aufbau einer Schnittstellenbaugruppe für zusätzliche Dienste hängt ab vom jeweils anzuschließenden Dienst. Der Datenfluß auf dem Bus 46 zwischen den einzelnen Schnittstellenbaugruppen 36, 38, 40 und 42 erfolgt nach einem bestimmten internen Datenprotokoll. Die Schnittstellenbaugruppen für zusätzliche Dienste 42 haben damit in erster Linie die Aufgabe der Protokollumsetzung zwischen internem Protokoll und dem Protokoll für den jeweiligen zusätzlichen Dienst.

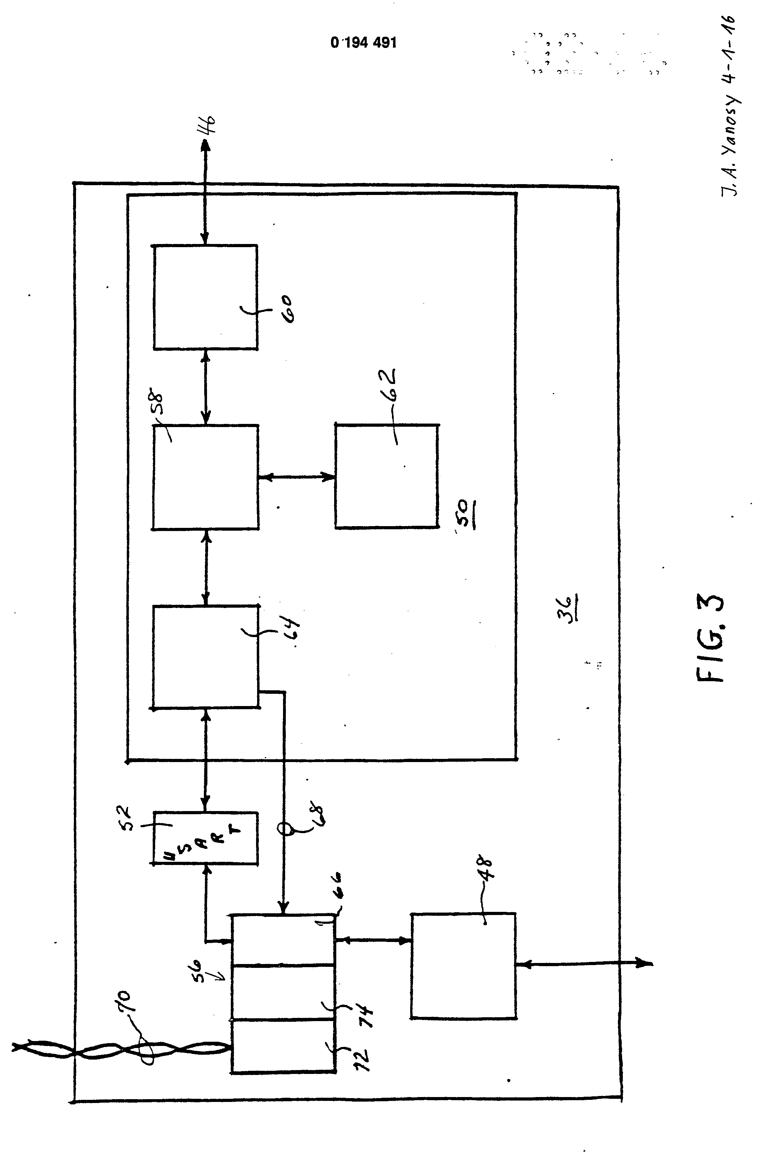

Figur 3 zeigt ein detailliertes Blockdiagramm einer Schnittstellenbaugruppe für Sprach-und Datendienste 36. Diese enthält einen Schnittstellenbaustein 50, einen allgemein als USART (universal synchronous/ asynchronous receiver/transmitter) bezeichneten Baustein 52, einen Schnittstellenbaustein 48 und einen Übertragungsbaustein 56. Der Übertragungsbaustein 56 wirkt unter anderem als Weiche und führt als Multiplexer in der einen Richtung Sprache und Daten zusammen und teilt sie in der Gegenrichtung als Demultiplexer wieder auf. Der Baustein 52 - (USART) tauscht Daten zwischen dem Schnittstellenbaustein 50 und dem Übertragungsbaustein 56, während die Sprache über den Schnittstellenbaustein 48 zum PCM-Bus 44 geht.

Der Schnittstellenbaustein 50 enthält einen Speicher 58, auf den gleichermaßen von einer Busanschlußschaltung 60, einem Mikrocomputer 62 und einer Geräteanschlußschaltung 64 zugegriffen werden kann. Die Geräteanschlußschaltung 64 ist in der Lage, über einen schnellen seriellen Bus mit einer Vielzahl von Endgeräten Informationen zu tauschen. Die Geräteanschlußschaltung 64 steht über eine Steuerleitung 68 mit einem im Übertragungsbaustein 56 enthaltenen Betriebsartschalter 66 in Verbindung.

Die Schnittstellenbaugruppe für Sprach-und Datendienste 36 stellt die Verbindung zu einer Teilnehmerleitung 18 her, die in modernen Nebenstellenanlagen aus einem Paar verdrillter Drähte 70 besteht, über die ein Vollduplexverkehr mit dem Teilnehmer möglich ist. Die Drähte 70 enden an einem Leitungssatz 72, der im Übertragungsbaustein 56 enthalten ist.

Die folgende Beschreibung des Übertraugngsbausteins 56 setzt voraus, daß die an der Schnittstellenbaugruppe für Sprach-und Datendienste 36 über die verdrillten Drähte 70 ankommende Information von einer teilnehmerseitigen Anschlußeinheit 14 kommt. Sprache und Daten kommen digital, beispielsweise nach dem bekannten Manchestercode codiert, an. Die Information kommt über den Leitungssatz 72 in den Decoderteil eines Codecs 74. Beispielsweise besteht ein Datenrahmen aus 20 Informationsbits, wobei die ersten zwei dieser Bits, die den Decoderteil des Codecs 74 vom Leitungssatz 72 her erreichen, Bits sind, die der Steuerung, Signalisierung und Synchronisation dienen. Die verbleibenden 18 Bits bleiben für die Nutzinformation. Dies kann entweder Sprache oder Datenverkehr sein und der Weg durch den Betriebsartschalter 66 kann vorgewählt werden. Bei stärkerer Inanspruchnahme des Datenverkehrs kann durch Austausch der Schnittstellenbaugruppe 36 die Möglichkeit geschaffen werden, die Aufteilung der 18 Bits auf Sprache und Daten dynamisch durch eines der zwei Steuerbits zu variieren.

Bei der bevorzugten Ausführungsform einer Zusatzeinrichtung für Datendienste 12 kann das Übertragungsschema durch die Formel "2B + D" gekennzeichnet werden. Dabei enthält ein Rahmen zwei Kanäle mit je 64 kbit/s (B-Kanäle) und einen Kanal mit 16 kbit/s (D-Kanal). Die Zuordnung der Kanäle zu den Diensten erfolgt entsprechend der gewählten Betriebsart. Es sind hier drei bevorzugte Betriebsarten möglich. Diese können durch den Aufbau der Leiterplatte unveränderbar vorgegeben oder von der Geräteanschlußschaltung 64 aus steuerbar sein. In einer ersten Betriebsart wird jeder B-Kanal mit 64 kbit/s als Sprachkanal verwendet, während der D-Kanal Datenpakete mit 16 kbit/s überträt. In einer zweiten Betriebsart wird ein B-Kanal als Sprachkanal mit 64 kbit/s verwendet, während der andere B-Kanal mit dem D-Kanal zusammengefaßt wird und der Datenübertragung mit 80 kbit/s dient. In der dritten Betriebsart werden alle Kanäle zu einem Datenkanal mit 144 kbit/s zusammengefaßt. Die gewählte Betriebsart hängt natürlich von den Bedürfnissen und Wünschen des jeweiligen Teilnehmers ab. Wenn die Betriebsart nicht variabel ist, dann wird der Betriebsschalter 66 mit Logikschaltungen und Zählern in bekannter Weise so ausgeführt, daß sich die erforderliche Aufteilung der für den Benutzer verfügbaren 18 Bits pro Rahmen ergibt. Sämtliche vom Teilnehmer kommenden Dateninformationen werden zum Baustein 52 - (USART) gegeben, während alle Sprachinformationen zum Schnittstellenbaustein 48 gegeben werden.

Der Baustein 52 ( USART) empfängt die vom Teilnehmer über den Übertragungsbaustein 56 kommenden Informationen als seriellen Datenstrom. Wenn, was in der bevorzugten Ausführungsform der Fall ist, der Schnittstellenbaustein 50 für eine parallele Datenverarbeitung ausgelegt ist, dann führt der Baustein 52 die Seriell-Parallel-Wandlung durch. Zusätzlich sorgt der Baustein 52 durch Einfügen und Entnehmen von Füllbits in Übertragungspausen für einen kontinuierlichen Datenfluß. Er erfüllt damit Funktionen des bekannten HDLC-Protokolls.

Der Schnittstellenbaustein 48 weist mehrere serielle Ein-/Ausgänge auf, die alle auf einen Zeitmultiplex-Datenbus und über diesen zu einer Koppelstufe führen. Jeder über einen der Ein-/Ausgänge führenden Kanäle kann mit jedem anderen verbunden werden.

Wenn also in der vorliegenden Beschreibung sinngemäß ein Verbindungsweg mit Sprache genannt ist, so ist damit ein Weg gemeint, der ein kontinuierliches Zeitmultiplexsignal führen kann. Ist dagegen ein Verbindungsweg mit Daten genannt, so ist ein Weg gemeint, der diskontinuierliche Datenblöcke führen kann.

Der Schnittstellenbaustein 48 empfängt Sprache und stellt die notwendigen Verbindungen zum PCM-Bus 44 her, der beispielsweise 32 Vollduplex-PCM-Kanäle übertragen kann. Solche Mehrkanal-PCM-Busse sind bekanntlich in digitalen (Sprach-)Vermittlungsstellen üblich, beispielsweise im System 12 der ITT. Damit sind bereits die Voraussetzungen für einen späteren Ersatz der Durchschaltevermittlung 20 durch eine digitale Vermittlungsstelle gegeben. Die Trennung von Sprache und Daten in der Schnittstellenbaugruppe für Sprach-und Datendienste 36 erfolgt ohne Störung der Sprachdienste.

Der Datenweg geht weiter über den Schnittstellenbaustein 50 zu dem in Figur 2 gezeigten Bus 46 und weiter über die Schnittstellenbaugruppe für Datendienste 40 über die Verbindungsleitung 32 zum digitalen Koppelnetz 30 (Figur 1). Die Verbindungsleitung 32 ist ein PCM-Bus wie der PCM-Bus 44. Daran können weitere Zusatzeinrichtungen für Datendienste 12 angeschlossen sein.

Der Baustein 52 (USART) und der Codec 74 sind handelsübliche Bausteine. Der Betriebsartschalter 66 kann auf einfache Weise aus Bausteinen gebildet werden, die als programmable array logic (PAL) bekannt ist.

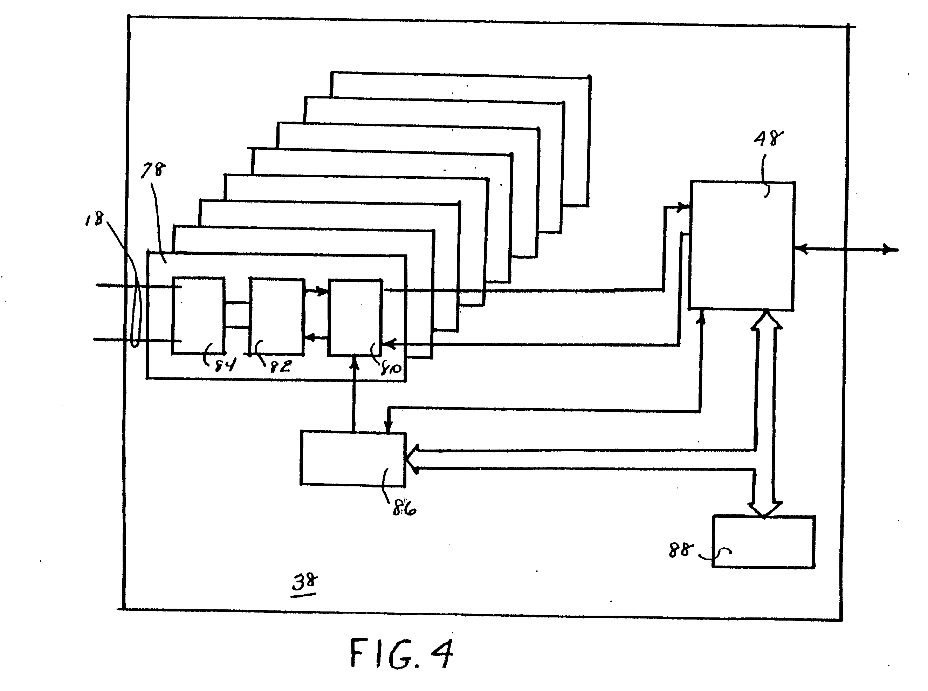

In der ersten Stufe der Entwicklung von einer reinen Sprachnebenstellenanlage zu einem voll integrierten Netz für Sprache und Daten müssen die Sprachsignale vom PCM-Bus 44 wieder in herkömmliche Telefonsignale zurückgewandelt werden, um von der Durchschaltevermittlung 20 verarbeitet werden zu können. Die Zusatzeinrichtung für Datendienste 12 muß sowohl für die Sprachendgeräte 28 wie für die Durchschaltevermittlung 20 transparent erscheinen. Die Schnittstellenbaugruppe für Durchschalteverbindungen 38, die in Figur 4 gezeigt ist, enthält deshalb einen Schnittstellenbaustein 48 und ein Telefondienstteil 78. Das Telefondienstteil 78 enthält einen Codec 80 einschließlich eines Filters, eine Einrichtung 82 zur Nachbildung der Funktionen eines Fernsprechgeräts und eine Ruferkennungs-und Gabelschaltung 84. Die vom PCM-Bus 44 kommende Sprachinformation wird im Codec 80 in ein analoges Sprachsignal zurückverwandelt, wie es von der Durchschaltevermittlung 20 benötigt wird. Dieses Signal wird dann durch die Einrichtung 82 und die Ruferkennungs-und Gabelschaltung 84 weitergeführt. Codecs mit Filter sind handelsübliche Bausteine. Auch Einrichtungen zur Nachbildung der Funktionen eines Fernsprechgerätes sowie Ruferkennungs-und Gabelschaltungen sind dem Fachmann auf diesem Gebiet grundsätzlich bekannt.

Weiter weist die Schnittstellenbaugruppe für Durchschalteverbindungen 38 eine Einrichtung 86 auf, die Hilfsfunktionen für die Telefondienstteile 78 erfüllt. Hierzu gehört die Auswertung der Ruferkennung, das Auslösen von Schleifenschlüssen und die Zuordnung von Kanälen zu den einzelnen Telefondienstteilen 78. Eine wichtige Hilfsfunktion ist auch die Synchronisation zwischen Telefondienstteil 78 und Schnittstellenbaustein 48. Außerdem kann die Schnittstellenbaugruppe für Durchschalteverbindungen 38 eine Steuereinheit 88 enthalten, die vorzugsweise durch einen Ein-Chip-Mikrocomputer gebildet wird. Die Steuereinheit 88 steht über einen parallelen Datenbus mit dem Schnittstellenbaustein 48 und der Einrichtung 86 in Verbindung. Die Steuereinheit 88 steuert die Einrichtung 86.

Dem inneren Aufbau der in Figur 2 gezeigten Schnittstellenbaugruppe für Datendienste 40 ist keine besondere Abbildung gewidmet. Diese Schnittstellenbaugruppe enthält einerseits einen Schnittstellenbaustein zum Bus 46 hin und andererseits einen Schnittstellenbaustein zum digitalen Koppelnetz 30 hin. Beide sind direkt miteinander verbunden. Der Schnittstellenbaustein zum Bus 46 hin erfüllt die gleichen Aufgaben wie der Schnittstellenbaustein 50 in der Schnittstellenbaugruppe für Sprach-und Datendienste 36. Er ist auch wie jener aufgebaut, vgl. Figur 3 mit zugehöriger Beschreibung. Der Schnittstellenbaustein zum digitalen Koppelnetz 30 hin ist ebenso aufgebaut wie der Schnittstellenbaustein 48.

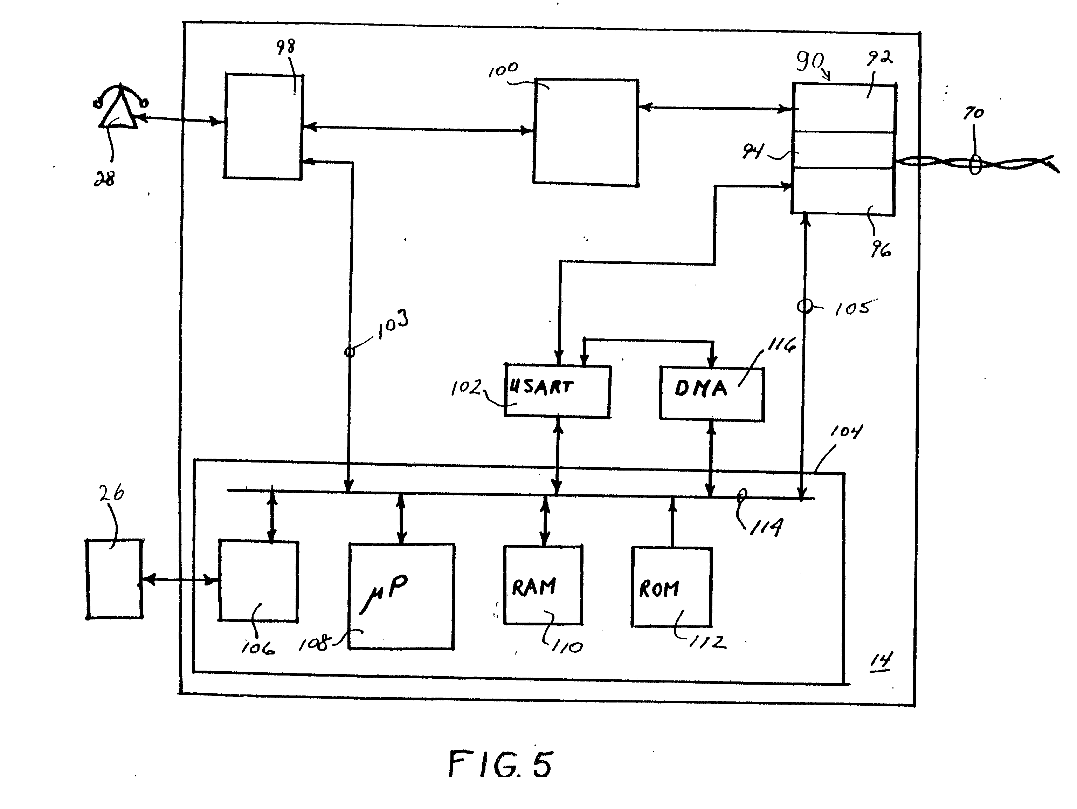

Anhand der Figur 5 wird nun eine Ausführungsform einer teilnehmerseitigen Anschlußeinheit 14 beschrieben. Diese enthält einen Übertragungsbaustein 90, der dem - schon beschriebenen Übertragungsbaustein 56 entspricht. Er enthält einen Leitungssatz 92, einen Codec 94 und einen Betriebsartschalter 96. Das angeschlossene Sprachendgerät 28 ist mit dem Übertragungsbaustein 90 über einen handelsüblichen Codec 100 mit Filter und einen herkömmlichen Telefonanschlußbaustein 98 verbunden. Der Datenaustausch erfolgt über einen Baustein 102 (USART), der die Verbindung zu einem Mikrocomputer 104 herstellt. Der Mikrocomputer 104 weist einen Schnittstellenbaustein 106 zum Anschluß eines Datenendgerätes auf. Vorzugsweise enthält der Mikrocomputer 104 einen Mikroprozessor 108, einen Schreib-Lese-Speicher 110 (RAM) und einen Nur-Lese-Speicher 112 (ROM), die durch einen Bus 114 miteinander verbunden sind. Der Mikrocomputer 104 verarbeitet alle in der teilnehmerseitigen Anschlußeinheit 14 anfallenden Daten, unter anderem den Datenaustausch zwischen dem Baustein 102 und dem Datenendgerät 26. Außerdem werden der Telefonanschlußbaustein 98 und der Betriebsartschalter 96 vom Mikrocomputer 104 über Leitungen 103 bzw. 105 überwacht. Vorzugsweise enthält die teilnehmerseitige Anschlußeinheit 14 noch einen Direktzugriffsbaustein 116 (DMA), durch den der Baustein 102 einen schnellen Zugriff zu den gespeicherten Informationen erhält, ohne den Mikrocomputer 104 zu behindern.

Die Zusatzeinrichtung für Datendienste 12 kann in der Größe stark variiert werden. So kann die Anzahl der Schnittstellenbaugruppen für Sprach-und Datendienste 36 erweitert werden, wenn mehr Teilnehmer gleichzeitig mit Sprache und Daten versorgt werden sollen. Daraus folgt dann eine entsprechende Anzahl an Schnittstellenbaugruppen für Durchschalteverbindungen 38 und Schnittstellenbaugruppen für Datendienste 40.

Auch kann das vorhandene System 10 erweitert werden, wobei über mehrere Zusatzeinrichtungen 12 alle Teilnehmer der Durchschaltevermittlung 20 mit Datendiensten versorgt werden können. Dabei sind dann alle Zusatzeinrichtungen 12 mit demselben digitalen Koppelnetz 30 verbunden. Ist eines Tages die Durchschaltevermittlung 20 zu ersetzen, dann kann das System 10 auf einfache Weise zu einem voll integrierten Sprach-und Datennetz werden, indem die Schnittstellenbaugruppen für Durchschalteverbindungen 38 entfernt werden und der PCM-Bus 44 direkt mit den dafür vorgesehenen Ein-/Ausgängen des digitialen Koppelnetzes 30 verbunden wird. Eine digitale Vermittlungsstelle des Systems 12 der ITT ist durch ihren dezentralen Aufbau für eine solche Umwandlung geradezu prädestiniert. Eine solche Vermittlungsstelle weist ein digitales Koppelnetz mit einer Vielzahl daran angeschlossener Modulsteuereinheiten auf. Jede Modulsteuereinheit ist in der Lage, für die über eine PCM-Verbindungsleitung geführten Sprach-und Datendienste die erforderlichen Verbindungen durch das Koppelnetz bereitzustellen. Von einem Schnittstellenbaustein 48 aus ist es sogar ohne Modulsteuereinheit möglich, zum digitalen Koppelnetz zuzugreifen.

Die Vorteile des erfindungsgemäßen Systems 10 beim Übergang von einem verhältnismäßig kleinen Datenzusatz zu einem voll integrierten System für Sprache und Daten sind zahllos. Der wohl größte Vorteil aus wirtschaftlicher Sicht liegt darin, daß nur gerade soviel Kapital wie nötig eingesetzt werden muß. Es ist insbesondere nicht nötig, eine noch zufriedenstellend arbeitende Nebenstellenanlage auszutauschen. Außerdem ist das für die Zusatzeinrichtung 12 eingesetzte Kapital nicht verloren, da die Zusatzeinrichtung 12 später in einer voll integrierten Nebenstellenanlage aufgeht. Außerdem werden die Sprach-dienste bis zum Ersatz der Durchschaltevermittlung in keiner Weise beeinträchtigt. Schon vor dem Ersatz der Durchschaltevermittlung können neu hinzukommende oder zu ersetzende Sprachendgeräte digitalisiert und an das digitale Koppelnetz angeschlossen werden. Sie können dann über die Zusatzeinrichtung mit den herkömmlichen Sprach-endgeräten Verbindung aufnehmen. Auch kann anstelle eines Datenendgerätes 26 ein digitales Sprachendgerät an die teilnehmerseitige Anschlußeinheit 14 angeschlossen werden.

## Ansprüche

1. Fernmeldevermittlungsanlage (10) mit einer Durchschaltevermittlungsstelle (20) und daran über Teilnehmerleitungen (18) angeschlossenen Teilnehmerendgeräten (28), insbesondere Sprachendgeräten , im folgenden als solche bezeichnet, **dadurch gekennzeichnet**, daß zumindest ein Teil der Sprachgeräte (28) über je eine teilnehmerseitige Anschlußeinheit (14) an die jeweiligen Teilnehmerleitungen (18) angeschlossen ist, daß jede teilnehmerseitige Anschlußeinheit (14) einen zusätzlichen Anschluß für ein digitales Teilnehmerendgerät (26), insbesondere ein Datenendgerät, im folgenden als solches bezeichnet, aufweist und daß eine Zusatzeinrichtung (12) vorhanden ist, über die die zu den teilnehmerseitigen Anschlußeinheiten (14) führenden

Teilnehmerleitungen (18) geführt sind und die mit einem digitalen Koppelnetz (30) verbunden ist.

2. Fernmeldevermittlungsstelle (10) nach Anspruch 1, dadurch gekennzeichnet, daß das digitale Koppelnetz (30) mit dem öffentlichen Fernmeldenetz verbunden ist.

3. Zusatzeinrichtung (12) der Fernmeldevermittlungsanlage (10) nach Anspruch 1 oder 2, dadurch gekennzeichnet, daß mindestens je eine Schnittstellenbaugruppe für Sprach-und Datendienste (36), eine Schnittstellenbaugruppe für Durchschalteverbindungen (38) und eine Schnittstellenbaugruppe für Datendienste (40) vorhanden ist, daß jede Verbindung zwischen einem Sprachendgerät (28) und der Durchschaltevermittlung (20) über eine Schnittstellenbaugruppe für Sprach-und Datendienste (36) und eine Schnittstellenbaugruppe für Durchschalteverbindungen (38) geführt wird und daß jede Verbindung zwischen einem Datenendgerät (26) und dem digitalen Koppelnetz (30) über eine Schnittstellenbaugruppe für Sprach-und Datendienste (36) und eine Schnittstellenbaugruppe für Datendienste (40) geführt wird.

4. Zusatzeinrichtung nach Anspruch 3, dadurch gekennzeichnet, daß wenigstens eine Schnittstellenbaugruppe für zusätzliche Dienste (42) zum Anschluß einer zusätzlichen Einrichtung (35) vorhanden ist und daß jede Verbindung zwischen einem Teilnehmer und einer zusätzlichen Einrichtung (35) über eine Schnittstellenbaugruppe für Sprach-und Datendienste (36) und eine Schnittstellenbaugruppe für zusätzliche Dienste (42) geführt wird.

5. Teilnehmerseitige Anschlußeinheit (14) der Fernmeldevermittlungsanlage (10) nach Anspruch 1 oder 2, dadurch gekennzeichnet, daß sie Einrichtungen (98, 100) enthält, die der Anpassung eines analogen Sprachendgerätes (28) an ein digitales Netz dienen und daß eine Weiche (96) vorhanden ist, in der Sprach-und Datenweg in Richtung zum Teilnehmer (26, 28) getrennt und in Gegenrichtung zusammengeführt werden.

6. Teilnehmerseitige Anschlußeinheit (14) nach Anspruch 5, dadurch gekennzeichnet, daß im Datenweg ein Mikrocomputer (104) enthalten ist.

7. Schnittstellenbaugruppe für Sprach-und Datendienste (36) der Zusatzeinrichtung nach Anspruch 3 oder 4, dadurch gekennzeichnet, daß zum Teilnehmer hin ein Übertragungsbaustein (56) mit einer Weiche (66) vorhanden ist und daß für den Sprachweg ein Schnittstellenbaustein (48) und für den Datenweg ein weiterer Schnittstellenbaustein (50) vorhanden ist.

8. Schnittstellenbaugruppe für Durchschalteverbindungen (38) der Zusatzeinrichtung nach Anspruch 3 oder 4, dadurch gekennzeichnet, daß sie einen Schnittstellenbaustein (48) zur Verbindung mit der Schnittstellenbaugruppe für Sprach-und Datendienste (36) und einen Telefondienstteil (78) zur Verbindung mit der Durchschaltevermittlung enthält und daß der Telefondienstteil (78) zur Durchschaltevermittlung hin das diesem Telefondienstteil (78) zugeordnete analoge Sprachendgerät (28) nachbildet.

9. Schnittstellenbaugruppe nach Anspruch 8, dadurch gekennzeichnet, daß zusätzliche Steuereinrichtungen (86, 88) enthalten sind.

10. Schnittstellenbaugruppe für Datendienste (40) der Zusatzeinrichtung nach Anspruch 3 oder 4, dadurch gekennzeichnet, daß sie zwei in Reihe geschaltete Schnittstellenbausteine (48 und 50) aufweist, wovon der zum digitalen Koppelnetz (30) hin führende Schnittstellenbaustein (48) demjenigen im Sprachweg der Schnittstellenbaugruppe für Sprach-und Datendienste (36) und der andere Schnittstellenbaustein (50) demjenigen im Datenweg der Schnittstellenbaugruppe für Sprach-und Datendienste (36) entspricht.

FIG. 1

0 194 491

FIG. 2

FIG. 3

J.A. Yanosy 4-1-16

FIG. 4

FIG. 5